# EUROPEAN PATENT SPECIFICATION

(11) **EP 0 523 426 B1**
(45) Date of publication and mention of the grant of the patent: **06.03.1996**
(21) Application number: 92110871.8
(22) Date of filing: 26.06.1992
(51) Int. Cl.: G01N 35/04

(54) **Device for feeding objects into a waste bin of an analyzer**
Vorrichtung zum Zuführen von Gegenständen zu einem Müllbehälter eines Analysators
Dispositif pour alimenter en objets une poubelle d'un analyseur

(30) Priority: 16.07.1991 DE 4123533
(43) Date of publication of application: 20.01.1993
(73) Proprietor: Johnson & Johnson Clinical Diagnostics, Inc., Rochester New York 14650 (US); KODAK AKTIENGESELLSCHAFT, D-70323 Stuttgart (DE)
(72) Inventor: Würschum, Hans Peter, c/o Kodak Aktiengesellschaft, W-7000 Stuttgart 60 (DE)
(74) Representative: Mercer, Christopher Paul

(56) References cited:
- EP-A- 0 269 752
- EP-A- 0 341 438
- EP-A- 0 471 981
- US-E-RE27637 (W.J. ROACH)

## Description

The invention relates to a device for feeding objects into a waste bin of an analyzer comprising a transport path, a transport carriage for a tray carrying containers and a processing station having an aspirating head for substances to be analyzed.

Various analyzers are known disclosing devices for feeding objects into a waste bin.

An analyzer is known from EP-A-0 341 438 in which a waste bin is arranged in the area of a processing station beneath an aspirating head and adjacent to trays carrying pipettes or containers filled with liquids to be analyzed. In this device, the aspirating head picks up a pipette and after use, i. e. after aspiration, mixing and distributing of the liquids to be analyzed, throws it into the waste bin.

EP-A-0 269 752 discloses an analyzer apparatus comprising a conveyor plate carrying a number of cups, a processing station having an aspirating head and a cup discharge mechanism for lifting up from the conveyor plate and feeding into a waste bin those cups for which measurement has been completed. The cup discharge mechanism has grooves into which the cups fit automatically with the movement of the conveyor plate on a transport path and rod members disposed on both sides of the grooves meshing with the cups in such a manner as to lift up the cups. Furthermore, the cup discharge mechanism formed as a cup hanging plate or feeding chute, respectively, can be pivoted at a tilted position in which the cups slide along the rod members and out of the cup hanging plate down into the waste bin.

It is the object of the invention to provide a device of the generic type which is of compact design, easy to clean and operates reliably. Also, contamination of the substances to be analyzed and soiling of the analyzer are to be prevented.

Moreover, the processing rate is to be increased considerably in order to meet the requirements of a quick and reliable diagnosis.

According to the invention as defined in claim 1, the above object is attained in that
the feeding chute is removably arranged on a pivotable retainer within the transport path;
the retainer includes at least one blocking element for blocking the transport carriage when said feeding chute has been removed from said retainer; and
the feeding chute includes means forming part of the transport path for the transport carriage when said feeding chute has been attached to said retainer.

The invention provides for the feeding chute which in its feeding position lying in the area of the aspirating head intersects the transport path substantially vertically, to be pivoted about a pin to its end position lying outside the transport path by means of the transport carriage movable to a first direction, and for the retainer in its end position and together with the blocking element to project into the transport path and limit the travel of the transport carriage when the feeding chute has been removed.

Expediently, the transport carriage can be moved in said first direction and in the opposite direction by means of a microprocessor-controlled stepper motor and a sensor is arranged in the area and upstream of the feeding chute for detecting the presence of the transport carriage.

Advantageously, the processing station is shut down when the feeding chute has been removed and, thus, a used pipette cannot be thrown off from the aspirating head.

Further features and advantages can be inferred from the description of an embodiment of the invention shown in the drawing and from the remaining sub-claims.

In the drawing
- Fig. 1: shows a top view of the device according to the invention and a section of the transport path,
- Fig. 2: shows a lateral view of the device according to Fig. 1 in cross-section along a line A-A of Fig. 1, and
- Fig. 3: is the device according to Fig. 2 in a further functional representation.

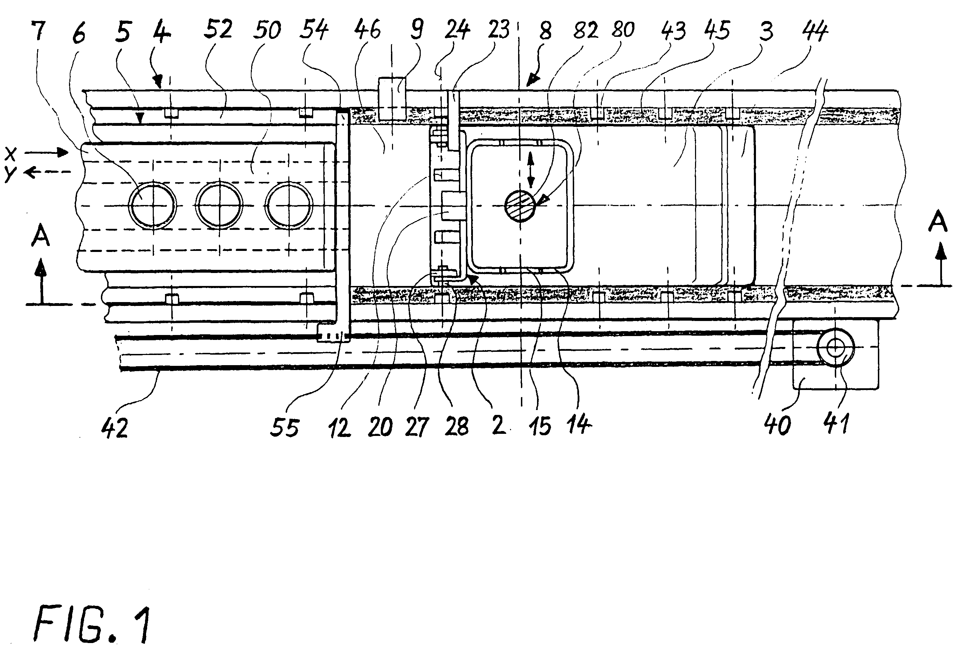

The device illustrated in Fig. 1 consists of a feeding chute 1 and a retainer 2 which are arranged within a recess 44 in a transport path 4 and above a waste bin 3. Retainer 2 having a blocking element 20 is supported by two bearings 27 via pins 28 and starting from a stop member 23 can be pivoted about a fulcrum 24 along the longitudinal axis of the transport path.

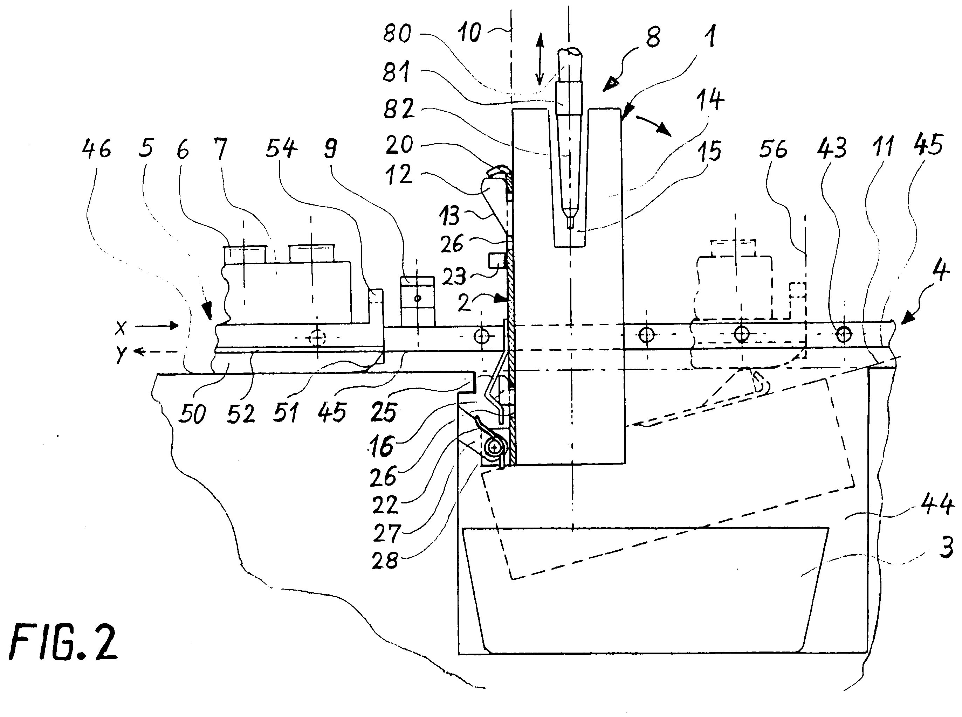

Feeding chute 1 is illustrated in its feed position 10 in which in the area of a processing station 8 its vertically extending center axis is oriented towards an aspirating station 82 located below an aspirating head 80 for liquids to be analyzed so that a pipette 81 can be thrown off (see Fig. 2).

Means 12 are arranged on feeding chute 1 connecting it to the retainer 2, said chute consisting of a hollow cylinder made of a chemically resistent plastic material and having a square cross-section.

A transport carriage 5 having a tray 7 which carries a container 6 is arranged on transport path 4 and supported by a surface 46 of transport path 4 via its two skids 50. Carriage 5 is provided with lateral ribs 52 cooperating with guides 45 and hold-down means 43 of the transport path.

The skids 50 have a distance from each other which corresponds to the distance of means 12 at the feeding chute.

At a front wall facing the feeding chute 1 transport carriage 5 is provided with a flag 54 cooperating with a sensor 9 arranged at the transport path 4 and a tray movement member 55 on the opposite side.

Tray movement member 55 is connected to an endless drive belt 42 which runs outside and along transport path 4 and is guided around a drive pulley 41 of a microprocessor-controlled stepper motor 40 and an idling pulley (not illustrated).

In Fig. 2, the feeding chute 1 is shown in its vertical feed position for throwing a pipette 81 into the waste bin 3 and in its horizontal end position 11 for removing liquids to be analyzed from the containers 6 by means of the aspirating head 80.

On bearings 27, the feeding chute 1 is provided with resetting means 22 shaped as leg springs urging the chute against stop member 23 into the feed position 10.

In two of its side walls 14 extending along transport path 4 the feeding chute 1 has recesses 15 located at the level of the aspirating head 80 and forming a passage for the aspirating head with a pipette 81 inserted therein. Furthermore, in the area above bearing 27 the feeding chute 1 has an additional holding element 16 projecting through an aperture 26 on retainer 2 and is centered and fixed to the retainer by a leaf spring 25. Means 12 of feeding chute 1 are provided with a ramp (13) and show a height which is greater than that of the blocking element 20 so that when feeding chute 1 has been pivoted into its end position 11 the means 12 formed on retainer 2 define part of the sliding surface 46 for the skids 50 of transport carriage 5. Chamfers 51 are provided on the front edges of skids 50.

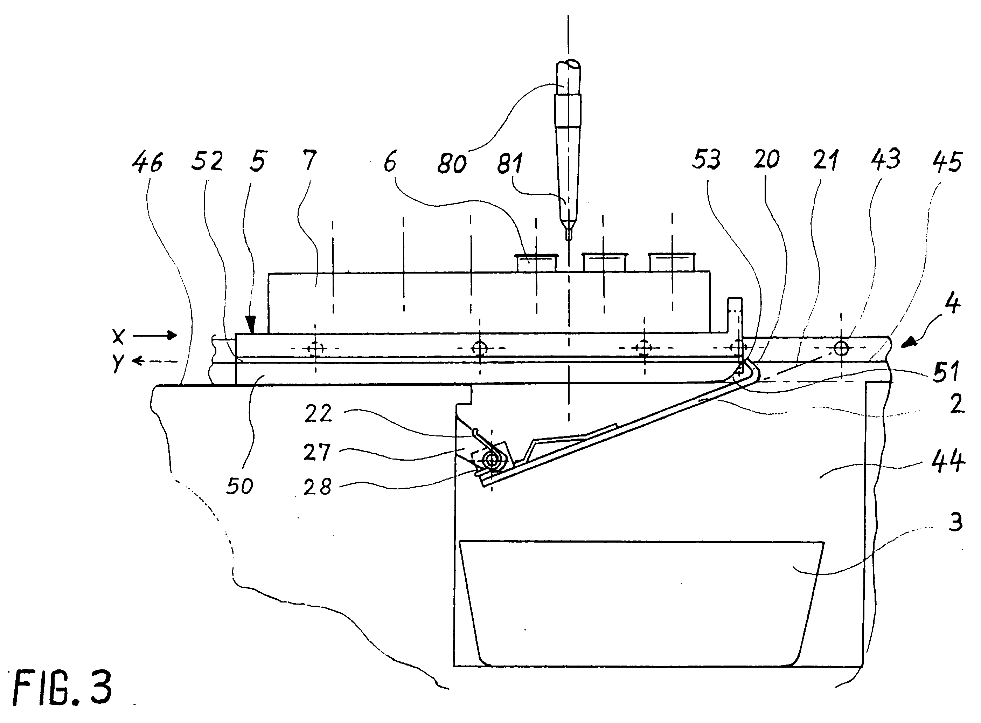

Fig. 3 shows retainer 2 in its end position 21 with the feeding chute 1 being removed. The leading edge 53 of transport carriage 5 contacts blocking element 20 extending into the transport path 4 and carriage 5 is thus in a position in which the aspirating head 80 is oriented halfway between two adjacent containers 6 held in tray 7.

The device operates as follows:

Initially, a tray 7 carrying containers 6 holding liquids to be analyzed is placed on transport carriage 5 in an input station not illustrated. After starting a microprocessor-controlled program for making a sample analysis the transport carriage 5 is moved by means of stepper motor 40 on transport path 4 in the first direction (X) to reach the feeding chute 1 positioned in its feed position. Before transport carriage 5 reaches the feeding chute 1 flag 54 passes an optoelectrical sensor 9 producing a signal for counting the steps of the stepper motor 40 by means of a microprocessor-controlled control unit (not illustrated) - see Fig. 1. Then transport carriage 5 knocks against retainer 2 of feeding chute 1 and pivots it along the transport path 4 into recess 44. During further movement, the transport carriage slides with its skids 50 over the means 12 of retainer 2 until it reaches an end position 56 corresponding to a rated value, i. e. a predetermined number of steps. By means of its guide ribs 52 the transport carriage 5 is held between the guides 45 and the hold-down means 43 of the transport path 4 (see Fig. 2). Subsequently, the direction of rotation of stepper motor 40 is reversed and transport carriage 5 returned in the second direction (Y) until flag 54 again reaches sensor 9. If the number of steps in the second direction (Y), which corresponds to the actual value, is identical with the rated value, the control unit detects that a feeding chute 1 is attached to retainer 2.

This effects the transport carriage 5 to be moved again in the first direction (X) until the central axis of the foremost container 6 is located beneath the aspirating station 82 of the aspirating head 80 equipped with a pipette 81.

After removal of the liquid to be analyzed from container 6 and during mixing with a sample liquid to be analyzed in a further processing station (not illustrated), the transport carriage 5 is moved in the second direction (Y) until the feeding chute 1 has been pivoted back to its feed position 10 by means of the resetting means 22. When the mixing and distributing procedure of the liquid is finished, the aspirating head 80 is returned to the aspirating station 82 by guiding it normal to the transport path 4 into the feeding chute 1 through recess 15 in side wall 14. Subsequently, the used-up pipette 81 is stripped from the aspirating head 80 by a means not illustrated and thrown into waste bin 3 which for emptying can be removed from recess 44 of transport path 4. Aspirating head 80 is then moved out of aspirating station 82 to receive a new pipette 81. This procedure is repeated until all liquids to be analyzed of containers 6 are used up.

When inserting a new tray 7 with the feeding chute being removed from retainer 2 and, by mistake, not having been reattached, the leading edge 53 of transport carriage 5 will abut blocking element 20 of retainer 2 and be stopped during subsequent movement of the carriage in the first direction (X) (see Fig. 3). Stepper motor 40, however, which is slowed down continues to receive its predetermined number of control pulses by the control unit.

During the subsequent return movement in the second direction (Y) a smaller stepping number for the stepper motor 40 will thereby result, which corresponds to a smaller actual value.

This actual value is detected by the control unit as a feeding chute 1 removed from retainer 2 and indicated to the user by a display means not illustrated. Moreover, the control unit effects a shut-down of processing station 8. Dumping a used-up pipette 81 is however prevented in order to avoid contamination of the liquids to be analyzed and the analyzer itself.

## Claims

1. Device for feeding objects into a waste bin (3) of an analyzer comprising a transport path (4), a transport carriage (5) for a tray (7) carrying containers (6) and a processing station (8) having an aspirating head (80) for substances to be analyzed; said device comprising a pivotable feeding chute (1) within the transport path is **characterized in that**
said feeding chute (1) is removably arranged on a pivotable retainer (2) within the transport path (4);
said retainer (2) includes at least one blocking element (20) for blocking the transport carriage (5) when said feeding chute has been removed from said retainer; and
said feeding chute (1) includes means (12) forming part of the transport path (4) for the transport carriage (5) when said feeding chute has been attached to said retainer.

2. Device according to claim 1, characterized in that in its feeding position (10) lying in the area of the aspirating head (80) the feeding chute (1) intersects the transport path (4) substantially vertically and can be pivoted about a pin (24) from the feeding position to an end position (11) lying outside the transport path.

3. Device according to claims 1 and 2, characterized in that with the feeding chute (1) being removed retainer (2) - in its end position (21) - projects together with the blocking element (20) into the transport path (4) and limits the travel of the transport carriage (5).

4. Device according to claims 1 through 3, characterized in that the feeding chute (1) and/or the retainer (2) can be brought into their end positions (11 and 21, respectively) by means of the transport carriage (5) when moved in a first direction (X).

5. Device according to claim 4, characterized in that the transport carriage (5) can be moved in the first direction (X) and in the opposite direction (Y) by means of a microprocessor-controlled stepper motor (40).

6. Device according to claims 1 through 4, characterized in that said means (12) of the feeding chute (1) define part of a sliding surface (46) of said transport path (4) for skids (50) of said transport carriage (5) when said feeding chute is in its end position (11).

7. Device according to claim 6, characterized in that means (12) are arranged in the area and upstream of the blocking element (20), as seen in direction X, and are provided with a ramp (13) on their front side.

8. Device according to claims 4 through 7, characterized in that on the bottom side of the transport carriage (5) skids (50) are arranged having chamfers (51) on their leading edges.

9. Device according to claims 1 through 5, characterized in that the feeding chute (1) and/or the retainer (2) can be brought into the feed position (10) by a resetting means (22) to abut against a stop member (23).

10. Device according to claim 9, characterized in that holddown means (43) for the transport carriage (5) are arranged in the area of the feeding chute (1) along the transport path (4).

11. Device according to claim 6, characterized in that the means (12) are designed as holding means.

12. Device according to claims 1 through 5, characterized in that a sensor (9) is arranged in the area and upstream of the feeding chute (1) for detecting the presence of the transport carriage (5).

13. Device according to claims 3 and 12, characterized in that the sensor (9) and the blocking element (20) are arranged along the transport path (4) at a distance determined as a rated value defined by a given number of steps performed by the stepper motor (40).

14. Device according to claim 13, characterized in that during the return travel of the transport carriage (5) in the second direction (Y) an actual value is determined.

15. Device according to claims 13 and 14, characterized in that in the case of the actual value being identical or smaller than the rated value the processing station (8) can be shut down and thus a used pipette (81) cannot be thrown off from the aspirating head.

16. Device according to claim 2, characterized in that two of the opposing side walls (14) of the feeding chute (1) are provided with recesses (15) arranged in the area of the aspirating head (80) and aligned along a horizontal direction of movement of the aspirating head (80).

## Patentansprüche

1. Vorrichtung zum Zuführen von Gegenständen zu einem Abfallbehälter (3) eines Analysegeräts mit einem Transportweg (4), einem Transportwagen (5) für eine Halterung (7) für Behälter (6) und einer Bearbeitungsstation (8) mit einem Saugkopf (80) für zu analysierende Substanzen; wobei die Vorrichtung eine schwenkbare Zuführrinne (1) innerhalb des Transportweges umfaßt und dadurch **gekennzeichnet** ist, daß
die Zuführrinne (1) entfernbar an einem schwenkbaren Halter (2) innerhalb des Transportweges (4) angebracht ist;
der Halter (2) wenigstens ein Blockierelement (20) zum Blockieren des Transportwagens (5) aufweist, wenn die Zuführrinne vom Halter entfernt wurde; und daß
die Zuführrinne (1) eine Einrichtung (12) umfaßt, die einen Teil des Transportweges (4) für den Transportwagen (5) bildet, wenn die Zuführrinne am Halter angebracht ist.

2. Vorrichtung nach Anspruch 1, dadurch gekennzeichnet, daß die Zuführrinne (1) in ihrer Zuführstellung (10), die im Bereich des Saugkopfes (80) liegt, den Transportweg (4) im wesentlichen vertikal schneidet und um einen Stift (24) aus der Zuführstellung ein eine Endstellung (11) geschwenkt werden kann, die außerhalb des Transportweges liegt.

3. Vorrichtung nach den Ansprüchen 1 und 2, dadurch gekennzeichnet, daß bei vom Halter (2) entfernter Zuführrinne (1) dieser - in seiner Endstellung (21) - zusammen mit dem Blockierelement (20) in den Transportweg (4) vorsteht und den Weg des Transportwagens (5) begrenzt.

4. Vorrichtung nach den Ansprüchen 1 bis 3, dadurch gekennzeichnet, daß die Zuführrinne (1) und/oder der Halter (2) durch den Transportwagen (5) in ihre Endstellungen (11 bzw. 21) gebracht werden können, wenn dieser in einer ersten Richtung (X) bewegt wird.

5. Vorrichtung nach Anspruch 4, dadurch gekennzeichnet, daß der Transportwagen (5) durch einen mikroprozessorgesteuerten Schrittmotor (40) in der ersten Richtung (X) und in der entgegengesetzten Richtung (Y) bewegt werden kann.

6. Vorrichtung nach den Ansprüchen 1 bis 4, dadurch gekennzeichnet, daß die Einrichtung (12) der Zuführrinne (1) einen Teil einer Gleitfläche (46) des Transportweges (4) für Gleitstücke (50) des Tansportwagens (5) bildet, wenn sich die Zuführrinne in ihrer Endstellung (11) befindet.

7. Vorrichtung nach Anspruch 6, dadurch gekennzeichnet, daß die Einrichtung (12) im Bereich und oberhalb des Blockierelements (20), gesehen in der Richtung X, angeordnet und an ihrer Vorderseite mit einer Rampe (13) versehen ist.

8. Vorrichtung nach den Ansprüchen 4 bis 7, dadurch gekennzeichnet, daß auf der Bodenseite des Transportwagens (5) Gleitstücke (50) mit Abrundungen (51) an ihren vorderen Rändern vorgesehen sind.

9. Vorrichtung nach den Ansprüchen 1 bis 5, dadurch gekennzeichnet, daß die Zuführrinne (1) und/oder der Halter (2) durch eine Rücksetzeinrichtung (22) in die Zuführstellung (10) gebracht werden können, um an einen Anschlag (23) anzustoßen.

10. Vorrichtung nach Anspruch 9, dadurch gekennzeichnet, daß im Bereich der Zuführrinne (1) längs des Transportweges (4) Niederhalteeinrichtungen (43) für den Transportwagen (5) angeordnet sind.

11. Vorrichtung nach Anspruch 6, dadurch gekennzeichnet, daß die Einrichtung (12) als Halteeinrichtung vorgesehen ist.

12. Vorrichtung nach den Ansprüchen 1 bis 5, dadurch gekennzeichnet, daß im Bereich und vor der Zuführrinne (1) ein Sensor (9) zum Erfassen des Vorhandenseins des Transportwagens (5) vorgesehen ist.

13. Vorrichtung nach den Ansprüchen 3 und 12, dadurch gekennzeichnet, daß der Sensor (9) und das Blockierelement (20) längs des Transportweges (4) in einem Abstand angeordnet sind, der als ein Nominalwert bestimmt ist, der durch eine gegebene Anzahl von durch den Schrittmotor (40) ausgeführten Schritten definiert ist.

14. Vorrichtung nach Anspruch 13, dadurch gekennzeichnet, daß beim Rückweg des Transportwagens (5) in der zweiten Richtung (Y) ein tatsächlicher Wert bestimmt wird.

15. Vorrichtung nach den Ansprüchen 13 und 14, dadurch gekennzeichnet, daß in dem Fall, daß der tatsächliche Wert gleich oder kleiner als der Nominalwert ist, die Bearbeitungsstation (8) abgeschaltet werden kann, damit vom Saugkopf keine gebrauchte Pipette (81) abgegeben wird.

16. Vorrichtung nach Anspruch 2, dadurch gekennzeichnet, daß zwei der gegenüberliegenden Seitenwände (14) der Zuführrinne (1) mit Ausnehmungen (15) versehen sind, die im Bereich des Saugkopfes (80) vorgesehen und längs der horizontalen Bewegungsrichtung des Saugkopfes (80) ausgerichtet sind.

## Revendications

1. Dispositif pour décharger des objets dans un bac à déchets (3) d'un analyseur, comprenant un trajet de transport (4), un chariot de transport (5) pour un plateau (7) portant des récipients (6) et un poste de traitement (8) comportant une tête aspirante (80) pour des substances à analyser; ledit dispositif comprenant une glissière de déchargement pivotante (1) située dans le trajet de transport, caractérisé en ce que
ladite glissière de déchargement (1) est montée de façon amovible sur un dispositif de retenue pivotant (2) dans le trajet de transport (4);
ledit dispositif de retenue (2) comprend au moins un élément de blocage (20) servant à bloquer le chariot de transport (5) lorsque ladite glissière de déchargement a été retirée dudit dispositif de retenue; et
ladite glissière de déchargement (1) comprend des moyens (12) faisant partie du trajet de transport (4) destiné au chariot de transport (5) lorsque ladite glissière de déchargement a été fixée audit dispositif de retenue.

2. Dispositif selon la revendication 1, caractérisé en ce que dans sa position de déchargement (10) située dans la zone de la tête aspirante (80), la glissière de déchargement (1) traverse sensiblement verticalement le trajet de transport (4) et peut pivoter autour d'un axe (24), depuis la position de déchargement jusque dans une position d'extrémité (11) située à l'extérieur du trajet de transport.

3. Dispositif selon les revendications 1 et 2, caractérisé en ce que lorsque la glissière de déchargement (1) est retirée, le dispositif de retenue (2) - dans sa position d'extrémité (21)- fait saillie conjointement avec l'élément de blocage (20) dans le trajet de transport (4) et limite le déplacement du chariot de transport (5).

4. Dispositif selon les revendications 1 à 3, caractérisé en ce que la glissière de déchargement (1) et/ou le dispositif de retenue (2) peuvent être amenés dans leurs positions d'extrémité (respectivement 11 et 21) au moyen du chariot de transport (5) lorsqu'il se déplace dans une première direction (X).

5. Dispositif selon la revendication 4, caractérisé en ce que le chariot de transport (5) peut être déplacé dans la première direction (X) et dans la direction opposée (Y) au moyen d'un moteur pas-à-pas (40) commandé par un microprocesseur.

6. Dispositif selon les revendications 1 à 4, caractérisé en ce que lesdits moyens (12) de la glissière de déchargement (1) définissent une partie d'une surface de glissement (46) dudit trajet de transport (4) pour des patins (50) dudit chariot de transport (5) lorsque ladite glissière de déchargement est dans sa position d'extrémité (11).

7. Dispositif selon la revendication 6, caractérisé en ce que des moyens (12) sont disposés dans la zone de l'élément de blocage (20) et en amont de ce dernier, lorsqu'on regarde dans la direction X, et comportent une rampe (13) sur leur face avant.

8. Dispositif selon les revendications 4 à 7, caractérisé en ce que sur le côté inférieur du chariot de transport (5) sont disposés des patins (50) comportant des chanfreins (51) au niveau de leurs bords avant.

9. Dispositif selon les revendications 1 à 5, caractérisé en ce que la glissière de déchargement (1) et/ou le dispositif de retenue (2) peuvent être amenés dans la position de déchargement (10) par des moyens de rappel (22) pour venir en butée contre un élément d'arrêt (23).

10. Dispositif selon la revendication 9, caractérisé en ce que des moyens de retenue (43) pour le chariot de transport (5) sont disposés dans la zone de la glissière de déchargement (1) le long du trajet de transport (4).

11. Dispositif selon la revendication 6, caractérisé en ce que les moyens (12) sont conformés en tant que moyens adaptés à retenir.

12. Dispositif selon les revendications 1 à 5, caractérisé en ce qu'un capteur (9) est disposé dans la zone de la glissière de déchargement (1) et en amont de cette dernière pour la détection de la présence du chariot de transport (5).

13. Dispositif selon les revendications 3 et 12, caractérisé en ce que le capteur (9) et l'élément de blocage (20) sont disposés le long du trajet de transport (4) à une distance déterminée en tant que valeur nominale définie par un nombre donné de pas exécutés par le moteur pas-à-pas (40).

14. Dispositif selon la revendication 13, caractérisé en ce que, pendant le trajet de retour du chariot de transport (5) dans la seconde direction (Y), une valeur effective est déterminée.

15. Dispositif selon les revendications 13 et 14, caractérisé en ce que dans le cas où la valeur effective est identique ou inférieure à la valeur nominale, le poste de traitement (8) peut être arrêté et par conséquent une pipette utilisée (81) ne peut pas être jetée de la tête aspirante.

16. Dispositif selon la revendication 2, caractérisé en ce que deux des parois latérales opposées (14) de la glissière de déchargement (1) sont pourvues de renfoncements (15) disposés dans la zone de la tête aspirante (80) et alignés dans une direction horizontale de déplacement de la tête aspirante (80).
